# EUROPEAN PATENT SPECIFICATION

(11) **EP 0 841 369 B1**
(45) Date of publication and mention of the grant of the patent: **08.05.2002**
(21) Application number: 97307551.8
(22) Date of filing: 26.09.1997
(51) Int. Cl.: C08L 23/10, C08L 53/00

(54) **Polyolefin composition for exterior trims**
Polyolefinformmasse für Aussenverkleidungsteile
Composition de polyoléfine pour enjoliveurs extérieurs

(30) Priority: 06.11.1996 JP 31008996; 06.11.1996 JP 31015696
(43) Date of publication of application: 13.05.1998
(73) Proprietor: Tonen Chemical Corporation, Tokyo (JP)
(72) Inventor: Masubuchi, Naganori, Shibuya-ku, Tokyo (JP); Isoi, Masaaki, Shibuya-ku, Tokyo (JP); Honda, Toshikazu, Shibuya-ku, Tokyo (JP); Magome, Tateshi, Shibuya-ku, Tokyo (JP); Suetsugu, Masakatsu, Shibuya-ku, Tokyo (JP); Fujita, Yuji, Shibuya-ku, Tokyo (JP)
(74) Representative: Calamita, Roberto

(56) References cited:
- EP-A- 0 605 180
- EP-A- 0 657 500
- EP-A- 0 661 341
- WO-A-96/06132
- WO-A-96/19533

## Description

The present invention relates to a polyolefin composition having a good moldability due to its high fluidity and ductility, and suitable for producing exterior automotive trims having a well-balanced mechanical strength such as stiffness and impact strength and an excellent hardness.

Polypropylene resins have been widely used as a material for exterior automotive trims such as bumpers, etc., because polypropylene resins provide shaped articles of good mechanical strength and are reusable. To meet the mechanical strength required for the exterior automotive trims, variant polymers, elastomers and other additives are blended into polypropylene. However, in order to allow effective recycling, exterior automotive trims are required to be produced from resin composition having the same or similar ingredients. To meet this requirement, various polyolefin compositions mainly comprising a propylene-ethylene copolymer have been proposed as the material for producing the exterior automotive trims.

For example, JP-A-5-59251 discloses a resin composition for automotive bumpers, which comprises (A) 45 to 70 weight % of a highly crystalline propylene-ethylene copolymer, (B) 10 to 20 weight % of an amorphous ethylene-propylene copolymer having an ethylene content of 70 to 90 weight % and a Mooney viscosity ML₁₊₄ (100°C) of 5 to 60, (C) 5 to 15 weight % of an ethylene-α-olefin copolymer containing 5 to 15 mol % α-olefin of 4 to 10 carbon atoms and having a density of 0.91 or less and a melt flow index (230°C) of 2 to 50 g/10 min, (D) 1 to 10 weight % of an amorphous ethylene-butene copolymer having a butene content of 10 to 25 weight % and a Mooney viscosity ML₁₊₄ (100°C) of 5 to 20 and (E) 8 to 15 weight % of talc having an average particle size D₅₀ of 1.0 to 3.0 µm and containing no particle having a particle size of 10 µm or larger. The component (A) contains 0.5 to 10 weight % ethylene and a polypropylene component containing 97 weight % or more of boiling n-heptane insolubles and 5 to 20 weight % cold p-xylene solubles, and has an intrinsic viscosity (decalin, 135°C) of 2 or more, a melt flow index of 30 to 100 and a bending modulus of 18,000 kgf/cm² or more. The component (B) is a rubbery material reinforced by polyethylene lamellas.

JP-A-6-9852 discloses a resin composition for automotive bumpers, which comprises (A) 45 to 80 weight % of a highly crystalline propylene-ethylene copolymer, (B) 10 to 20 weight % of an amorphous ethylene-propylene copolymer having an ethylene content of 70 to 90 weight % and a Mooney viscosity ML₁₊₄ (100°C) of 5 to 70, (C) 5 to 15 weight % of an ethylene-α-olefin copolymer containing 5 to 15 mol % α-olefin of 4 to 10 carbon atoms and having a density of 0.91 or less and a melt flow index (230°C) of 2.2 to 50 g/10 min, (D) 1 to 10 weight % of an amorphous ethylene-butene copolymer having a butene content of 10 to 25 weight % and a Mooney viscosity ML₁₊₄ (100°C) of 5 to 20 and (E) 8 weight % or less of talc having an average particle size D₅₀ of 1.0 to 3.0 µm and containing no particle having a particle size of 10 µm or larger. The component (A) contains 0.5 to 10 weight % ethylene and a polypropylene component containing 97 weight % or more of boiling n-heptane insolubles and 5 to 20 weight % cold p-xylene solubles, and has an intrinsic viscosity (decalin, 135°C) of 2 or more, a melt flow index of 30 to 100 and a bending modulus of 18,000 kgf/cm² or more. The component (B) is a rubbery material reinforced by polyethylene lamellas.

To improve the balance between the impact strength and the stiffness, the above resin compositions for automotive bumpers contain the amorphous ethylene-propylene copolymer and the amorphous ethylene-butene copolymer as the elastomer component together with the ethylene-α-olefin copolymer in addition to the highly crystalline propylene-ethylene block copolymer. However, the resin compositions containing such elastomer component provide a shaped article having a poor elongation at break and a reduced impact strength when the resin compositions are made highly fluid.

JP-A-5-230321 discloses a thermoplastic polymer composition comprising 100 parts by weight of a thermoplastic polymer component comprising 55 to 75% by weight of an ethylene-propylene block copolymer and 25 to 45% by weight of an ethylene-based copolymer and 7 to 25 parts by weight of talc having an average particle size of 5 µm or less and a specific surface area of 3.5 m²/g or more. The thermoplastic polymer has MFR of 30 to 150 g/10 min (at 230°C under a load of 2.16 kgf). The propylene homopolymer portion of the ethylene-propylene block copolymer has MFR of 50 to 300 g/10 min and an isotactic pentad fraction of 0.98 or more. The ethylene-based copolymer has a melting point of 30 to 100°C when measured by a differential scanning calorimeter. The crystal lamella of the propylene homopolymer portion in the composition has an average thickness of 8 nm or more when observed by an electron microscope from the normal direction of (100) or (010) plane. However, the previously proposed thermoplastic polymer composition has a poor impact strength due to lack of elasticity.

WO 96/06132 describes thermoplastic polymers for automotive compounds, comprising a copolymer of propylene and ethylene, having an ethylene content of less than 3.8 mole % (1A) or a semi-crystalline blend of polypropylene and ethylene-propylene copolymer (1B) or a mixture of 1A and 1B, together with a copolymer of ethylene and a C₃₋₈ olefin with Mw/Mn less than 3, with 1-10% talc.

Accordingly, an object of the present invention is to provide a polyolefin composition having a good ductility and moldability, and which is capable of producing shaped articles, such as automotive trims including bumpers, having a sufficient mechanical strength, impact strength and hardness.

As a result of intense research in view of the above objects, the inventors have found that a polyolefin composition comprising a crystalline propylene-ethylene copolymer, a specific ethylene-octene elastomer and the talc meets the above objects. The inventors have further found that the hardness of the shaped articles increases without reducing the mechanical strength, impact strength, etc. when a part of the ethylene-octene elastomer is replaced by a specific polyethylene and optionally a specific ethylene-propylene rubber. The present invention has been accomplished by these findings.

Thus, in a first aspect of the present invention, there is provided a polyolefin composition comprising:
(a) 55 to 75 parts by weight of a crystalline propylene-ethylene copolymer comprising 70 to 90 weight % of a propylene homopolymer component having an isotactic pentad fraction of 96% or more when measured by ¹³C-NMR, and 10 to 30 weight % of a propylene-ethylene copolymer component having a propylene/ethylene weight ratio of 25/75 to 75/25, said crystalline propylene-ethylene copolymer being produced by block-copolymerizing ethylene and propylene by a multi-stage copolymerization method and having a melt flow rate of 70 g/10 min or more when measured at 230°C under a load of 2.16 kgf;
(b) 22 to 28 parts by weight of an ethylene-octene elastomer having a melt index of 0.5 g/10 min or more when measured at 190°C under a load of 2.16 kgf, said ethylene-octene elastomer comprising 20 to 30 weight % of octene and a remainder consisting essentially of ethylene; and
(c) 5 to 15 parts by weight of talc.

In a second aspect of the present invention, there is provided a polyolefin composition comprising:
(a) 55 to 75 parts by weight of a crystalline propylene-ethylene copolymer comprising 70 to 90 weight % of a propylene homopolymer component having an isotactic pentad fraction of 96% or more when measured by ¹³C-NMR, and 10 to 30 weight % of a propylene-ethylene copolymer component having a propylene/ethylene weight ratio of 25/75 to 75/25, said crystalline propylene-ethylene copolymer being produced by block-copolymerizing ethylene and propylene by a multi-stage copolymerization method and having a melt flow rate of 70 g/10 min or more when measured at 230°C under a load of 2.16 kgf;
(b) 12 to 22 parts by weight of an ethylene-octene elastomer having a melt index of 0.5 g/10 min or more when measured at 190°C under a load of 2.16 kgf, said ethylene-octene elastomer comprising 20 to 30 weight % octene and the remainder consisting essentially of ethylene;
(c) 2 to 8 parts by weight of a polyethylene having a melting peak of 100°C or higher when measured by a differential scanning calorimeter;
(d) 0 to 10 parts by weight of an optional ethylene-propylene rubber; and
(e) 5 to 15 parts by weight of talc;
the total of (b) + (d) being 22 parts by weight or less and the total of (b) + (c) + (d) being 22 to 28 parts by weight.

The polyolefin composition of the present invention comprises a crystalline propylene-ethylene copolymer, an ethylene-octene elastomer, talc and optionally a polyethylene and an ethylene-propylene rubber.

### [1] Crystalline propylene-ethylene copolymer

The crystalline propylene-ethylene copolymer, a so-called impact copolymer (ICP), used in the present invention is required to have a melt flow rate (MFR) of 70 g/10 min or more, preferably 75 to 120 g/10 min when measured at 230°C under a load of 2.16 kgf to ensure a high fluidity of the polyolefin composition. MFR less than 70 g/10 min fails to impart a good fluidity to the polyolefin composition, thereby reducing the moldability. When MFR exceeds 150 g/10 min, the impact strength of the shaped articles is reduced.

The crystalline propylene-ethylene copolymer basically comprises (i) 70 to 90 weight % of a propylene homopolymer component and (ii) 10 to 30 weight % of a propylene-ethylene copolymer component. An ethylene homopolymer component may be contained in a small amount. These components are bonded each other to form another polymer. Although each of the components basically comprises propylene and/or ethylene, the components may contain other monomer such as α-olefin, diene, etc. in a small amount.

The propylene homopolymer component is preferred to be highly stereospecific as specified by an isotactic pentad fraction of 96% or more in view of improving the stiffness of the shape articles. The isotactic pentad fraction referred to in the present invention is determined according to ¹³C-NMR spectroscopy described in Macromolecules, 6, 925 (1973).

In the propylene-ethylene copolymer component, the weight ratio of propylene/ethylene is preferably 25/75 to 75/25, and more preferably 35/65 to 65/35. When the ratio is smaller than 25/75, the crystalline propylene-ethylene copolymer is poor in ductility and impact strength, and poor in elasticity when exceeds 75/25. The intrinsic viscosity [η] of the propylene-ethylene copolymer component is 2 to 5 dl/g, preferably 3 to 5 dl/g. When the intrinsic viscosity is lower than 2 dl/g, the impact strength cannot be effectively improved. An intrinsic viscosity higher than 5 dl/g brings about molding trouble to give a shaped article of a poor appearance due to an increased amount of gel portion.

The content of each component in the crystalline propylene-ethylene copolymer is 70 to 90 weight % for the propylene homopolymer component and 10 to 30 weight % for the propylene-ethylene copolymer component. The content of the ethylene homopolymer component, if present, is 3 weight % or less. When the content of the propylene homopolymer is lower than 70 weight % or the content of the propylene-ethylene copolymer component is higher than 30 weight %, the stiffness of the crystalline propylene-ethylene copolymer is low. When the content of the propylene homopolymer is higher than 90 weight % or the content of the propylene-ethylene copolymer component is lower than 10 weight %, the impact strength is lowered.

The ethylene content in the crystalline propylene-ethylene copolymer is preferably 2 to 30% by weight.

The crystalline propylene-ethylene copolymer is produced by block-copolymerizing ethylene and propylene by a multi-stage copolymerization method. The detailed reaction conditions are not specifically limited.

In the multi-stage copolymerization method, propylene is first polymerized over a Ziegler catalyst, etc. to prepare the propylene homopolymer component which may contain a small amount of a comonomer component. In the next stage, a mixed gas of ethylene and propylene is subjected to block copolymerization to form the propylene-ethylene copolymer component. To attain an isotactic pentad fraction of 96% or more of the propylene homopolymer component, propylene is preferred to be polymerized over a stereospecific catalyst disclosed in JP-A-6-271616, JP-A-6-298830, JP-A-7-62047 and JP-A-7-70266.

### [2] Ethylene-octene elastomer

The ethylene-octene elastomer is preferably produced by copolymerizing ethylene monomer and octene monomer in the presence of a metallocene catalyst which preferably comprises a metallocene compound and an alumoxane. The metallocene catalyst is described in detail in Japanese Patent Laid-Open No. 60-35006. The metallocene compound is a mono-, di- or tri-cyclopentadienyl complex having a central transition metal of Group IVB, VB or VIB of the Periodic Table. Of the transition metals, titanium or zirconium is preferable. The preferred metallocene compounds may be bis(cyclopentadienyl)titanium diphenyl, bis(cyclopentadienyl)titanium dimethyl, bis(cyclopentadienyl)zirconium diphenyl and bis(cyclopentadienyl)zirconium dimethyl. The alumoxane is a polymerized aluminum compound produced, for example, by contacting trialkylaluminum dissolved in an organic solvent with water.

The octene content in the ethylene-octene elastomer is preferably 20 to 30 weight %. An octene content less than 20 weight % produces shaped articles of a poor impact strength, and the stiffness of shaped articles is reduced when the octene content exceeds 30 weight %. The substantial part of the remainder of the ethylene-octene elastomer is ethylene.

The density of the ethylene-octene elastomer is 0.91 g/cm³ or less, preferably 0.85 to 0.88 g/cm³. The melt index (MI) measured at 190°C under a load of 2.16 kgf is 0.5 g/10 min or more, preferably 0.5 to 30 g/10 min, and more preferably 0.5 to 5 g/10 min. When MI is less than 0.5 g/10 min, the moldability of the polyolefin composition is reduced, and the impact strength of the shaped articles may be reduced when MI exceeds 30 g/10 min.

### [3] Polyethylene

A part of the ethylene-octene elastomer may be replaced by polyethylene and an optional ethylene-propylene rubber to mainly improve the hardness of the shaped articles.

The polyethylene may be a low density polyethylene (LDPE) having a density of 0.91 to 0.93 g/cm³, a linear low density polyethylene (LLDPE) having a density of 0.91 to 0.93 g/cm³ and a very low density polyethylene (VLDPE) having a density of 0.88 to 0.91 g/cm³.

The polyethylene usable in the present invention has a melting peak at 100°C or higher, preferably 110 to 130°C when measured by a differential scanning calorimeter. When the melting peak is lower than 100°C, the hardness of the shaped articles are not improved.

Also, the polyethylene is preferred to have MI of 1 to 30 g/10 min. MI less than 1 g/10 min reduces the moldability of the polyolefin composition and MI exceeding 30 g/10 min results in a poor impact strength of the shape articles.

### [4] Ethylene-propylene rubber

The ethylene-propylene rubber (EPR) is an amorphous copolymer of ethylene and propylene, and has an ethylene content of 50 to 90 mol%, preferably 70 to 80 mol% and a propylene content of 10 to 50 mol%, preferably 20 to 30 mol%. MFR of the ethylene-propylene rubber measured at 230°C under a load of 2.16 kgf is preferably 0.5 to 20 g/10 min, and more preferably 0.5 to 10 g/10 min.

### [5] Talc

The talc used in the present invention is preferred to have an average particle size of 10 µm or less, preferably 0.5 to 5 µm. A talc having an average particle size larger than 10 µm has little effect on improving the mechanical properties of the shaped articles and reduces the impact strength.

To more sufficiently improve the mechanical properties, heat resistance and weatherability of the shaped articles, the talc may be surface-treated by a surface-treating agent such as a silicone and modified silicone. The silicone may be an organopolysiloxane such as polydimethylsiloxane, and the modified silicone may be an adduct of organopolysiloxane, etc. with a silazane compound such as silazane, disilazane, trisilazane, hexacyclosilazane, etc. The surface treatment may be carried out in a Henschel mixer, etc. by mechanically mixing 100 parts by weight of the talc and 0.1 to 5, preferably 0.2 to 1 part by weight of the surface-treating agent.

### [6] Additives

The polyolefin composition of the present invention may contain additives, if desired, such as a heat stabilizer, an antioxidant, a light stabilizer, a flame retardant, a plasticizer, an antistatic agent, a release agent, a foaming agent, a colorant, a pigment, etc.

### [7] Blending amount

The blending amount of each components is 55 to 75 parts by weight, preferably 60 to 70 parts by weight for the crystalline propylene-ethylene copolymer, 22 to 28 parts by weight for the ethylene-octene elastomer, and 5 to 15 parts by weight for the talc.

A part of 22 to 28 parts by weight of the ethylene-octene elastomer may be replaced by 2 to 8 parts by weight of the polyethylene and optionally by 0 to 10 parts by weight of the ethylene-propylene rubber while keeping the total amount of the ethylene-octene elastomer and the ethylene-propylene rubber to 22 parts by weight or less. When a part of the ethylene-octene elastomer is replaced, each blending amount is preferably 12 to 22 parts by weight for the ethylene-octene elastomer, 2 to 8 parts by weight for the polyethylene and 0 to 10 parts by weight for the ethylene-propylene rubber wherein the sum of the ethylene-octene elastomer and the ethylene-propylene rubber is 22 parts by weight and the total of the ethylene-octene elastomer, the polyethylene and the ethylene-propylene rubber is 22 to 28 parts by weight.

When the blending amount of the crystalline propylene-ethylene copolymer is less than 55 parts by weight, the shaped articles have a poor mechanical strength, impact strength, etc., and the ductility of the polyolefin composition is reduced when more than 75 parts by weight.

When a part of the ethylene-octene elastomer is not replaced, a blending amount of the ethylene-octene elastomer less than 22 parts by weight results in an insufficient fluidity and ductility of the polyolefin composition and an insufficient impact strength of the shaped articles, and a blending amount larger than 28 parts by weight reduces the mechanical strength, heat resistance, stiffness of the shaped articles.

When a part of the ethylene-octene elastomer is replaced by the polyethylene and optionally the ethylene-propylene rubber, a blending amount of the ethylene-octene elastomer less than 12 parts by weight results in an insufficient fluidity and ductility of the polyolefin composition and an insufficient impact strength of the shaped articles, and a blending amount larger than 22 parts by weight reduces the mechanical strength, heat resistance and stiffness of the shaped articles.

A blending amount of the polyethylene less than 2 parts by weight cannot improve the hardness of the shaped articles sufficiently, and a blending amount larger than 8 parts by weight reduces the mechanical strength and stiffness.

A blending of the ethylene-propylene rubber exceeding 10 parts by weight results in a reduced mechanical strength and stiffness of the shaped articles.

When a part of the ethylene-octene elastomer is replaced by the polyethylene and optionally the ethylene-propylene rubber, a sum of the ethylene-octene elastomer and the ethylene-propylene rubber larger than 22 parts by weight reduces the bending modulus of the shaped articles. A total amount of the ethylene-octene elastomer, the polyethylene and the ethylene-propylene rubber less than 22 parts by weight reduces the impact strength of the shaped articles, and a total amount more than 28 parts by weight results in a poor bending modulus.

A talc blended in an amount less than 5 parts by weight has little effect on improving the stiffness and heat resistance of the shaped articles, and the fluidity of the polyolefin composition and the impact strength of the shaped articles are reduced when blended in an amount more than 15 parts by weight.

The additives mentioned above may be added, if desired, in an amount up to 3 parts by weight in total.

### [8] Production of polyolefin composition

The above components are blended by a known method without specifically limiting the conditions to obtain the polyolefin composition of the present invention in the form of powder, granules, pellet, etc. For example, blending may be carried out at an elevated temperature of 190 to 240°C usually by using a mixer or kneader, such as a heat roll mixer, a super mixer, a single screw extruder, a twin-screw extruder, Bumbury mixer, etc. The thus produced polyolefin composition of the present invention has a melt flow rate (MFR) of 18 g/10 min or more, preferably 30 to 60 g/10 min. When MFR is less than 18 g/10 min, the polyolefin composition is insufficient in the fluidity. The mechanical strength of the shaped articles may be reduced when MFR is larger than 60 g/10 min.

### [9] Production of shaped articles

The polyolefin composition of the present invention is molded to a shaped article by a known molding method such as an injection molding under conditions known in the art. For example, the polyolefin composition may be injection-molded to a shaped article under conditions of a resin temperature of 180 to 240°C and a mold temperature of 20 to 80°C.

### [10] Properties of shaped articles

The shaped articles molded from the polyolefin composition of the present invention have the following properties.

### (A) Impact strength

The shaped articles of the present invention have an elongation at break of 150% or more when measured according to JIS K7113. When the elongation at break is less than 150%, the impact strength is insufficient.

### (B) Embrittle temperature

The embrittle temperature of the shaped articles is -25°C or lower, preferably -50 to -30°C when measured according to JIS K7216. When the embrittle temperature is higher than -25°C, the impact strength of the shaped articles is insufficient.

### (C) Stiffness

The shaped articles of the present invention have a bending modulus of 1100 MPa or more when measured according to JIS K7203. When the bending modulus is less than 1100 MPa, the shaped articles are insufficient in the stiffness.

### (D) Hardness

The shaped articles of the present invention has a Rockwell hardness of 57 or more, preferably 59 or more when a part of the ethylene-octene elastomer is replaced by the polyethylene and the optional ethylene-propylene rubber. When the Rockwell hardness is less than 57, the shaped articles are poor in their appearance.

The present invention will be further described while referring to the following Examples which should be considered to illustrate various preferred embodiments of the present invention.

### SYNTHESIS EXAMPLE 1

### Synthesis of Crystalline Propylene-Ethylene Copolymer (ICP1)

### (1) propylene homopolymer component

A pre-activated metal magnesium was allowed to successively react with n-butylmagnesium chloride and n-butyl chloride in n-butyl ether as the solvent. Then HC(OC₂H₅)₃ was added dropwise to the reaction mixture. The solid substance was washed with n-hexane and dried under reduced pressure to obtain a solid product containing magnesium and chlorine. A suspension of the solid product in n-heptane was reacted with 2,2,2-trichloroethanol at 80°C for one hour in nitrogen atmosphere. The solid product thus treated was collected by filtration, washed with successive several portions of n-hexane and toluene, and reacted with titanium tetrachloride and subsequently with di-n-butyl phthalate. After collected by filtration and washed, the solid product was further reacted with titanium tetrachloride and washed with n-hexane to prepare the catalyst component (A).

The catalyst component (A) was introduced into n-heptane as the solvent and cooled to 5°C in nitrogen gas atmosphere, then triethylaluminum (TEAL) and 2,3,4-trimethyl-3-azacyclopentyltrimethoxysilane was added thereto. After evacuating the reaction system, propylene gas was continuously introduced and polymerized for 2.2 hours. After polymerization was completed, propylene gas was purged from the system by nitrogen gas, and the solid was washed, dried under reduced pressure to obtain a prepolymerization catalyst.

In an autoclave, n-heptane solvent, TEAL and t-butoxycyclopentyldimethoxysilane, and then the prepolymerization catalyst were introduced in nitrogen gas atmosphere. After introducing 18 liters of hydrogen gas as a molecular weight modifier and 3.0 liters of a liquid propylene, polymerization was conducted at 7 0°C for one hour.

### (2) propylene-ethylene copolymer component

After introducing 0.2 liter of hydrogen gas into the autoclave, a mixed gas of propylene and ethylene (1.03 by molar ratio) was supplied to carry out the copolymerization of propylene and ethylene for 1.5 hours under an internal pressure of 6.0 kgf/cm² (gauge pressure) to obtain a white powdery crystalline propylene-ethylene copolymer. The production conditions are shown in Table 1.

The results of analysis showed that the crystalline propylene-ethylene copolymer (ICP1) thus produced consisted of 87.0 weight % of the propylene homopolymer component and 13.0 weight % of the propylene-ethylene copolymer component. The isotactic pentad fraction (IPF) of the propylene homopolymer component measured by ¹³C-NMR was 97.5%. The weight ratio of propylene/ethylene and the intrinsic viscosity [η] measured at 135°C in decalin of the propylene-ethylene copolymer component was 60/40 and 3 dl/g, respectively. The melt flow rate of the crystalline propylene-ethylene copolymer (ICP1) was 70 g/10 min. The results are shown in Table 1.

### SYNTHESIS EXAMPLE 2

### Synthesis of Crystalline Propylene-Ethylene Copolymer (ICP2)

In the same manner as in Synthesis Example 1 except for omitting the prepolymerization and employing the polymerization conditions shown in Table 1, a crystalline propylene-ethylene copolymer (ICP2) was produced. The properties of the crystalline propylene-ethylene copolymer (ICP2) measured in the same manner as in Synthesis Example 1 are shown in Table 1.

**Table 1**

| | ICP1 | ICP2 |
|---|---|---|
| Polymerization Conditions | | |
| (1) First Stage (polymerization of propylene) | | |
| liquid propylene (liter) | 3.0 | 3.0 |
| hydrogen gas (liter) | 18 | 12.5 |

| (2) Second Stage (copolymerization of propylene and ethylene) | | |
|---|---|---|
| propylene/ethylene (molar ratio) | 1.03 | 0.84 |
| hydrogen gas (liter) | 0.2 | 0.3 |
| internal pressure (kgf/cm² G) | 6.0 | 6.1 |
| polymerization time (hour) | 1.5 | 1.5 |

| Properties | | |
|---|---|---|
| Propylene homopolymer component | | |
| Content (% by weight) | 87.0 | 88.0 |
| IPF (%) | 97.5 | 96.0 |

| Propylene-Ethylene copolymer component | | |
|---|---|---|
| Content (% by weight) | 13.0 | 12.0 |
| propylene/ethylene (weight ratio) | 60/40 | 50/50 |
| [η] (dl/g) | 3.0 | 3.0 |

| Propylene-Ethylene copolymer | | |
|---|---|---|
| MFR (g/10 min) | 70 | 80 |

### EXAMPLES 1 to 8 and COMPARATIVE EXAMPLES 1 to 7

The following materials were used to prepare a polyolefin composition.
(a) Crystalline Propylene-Ethylene Copolymer
   - ICP1:: Prepared in Synthesis Example 1 MFR: 70 g/10 min (230°C, 2.16 kgf)
   - ICP2:: Prepared in Synthesis Example 2 MFR: 80 g/10 min (230°C, 2.16 kgf)
(b) Elastomer
   - POE1:: Ethylene-Octene Elastomer manufactured by Dow Chemical Japan Co.
   Octene content: 24 % by weight.
   MI: 1 g/10 min (190°C, 2.16 kgf) Density: 0.87 g/cm³
   - POE2:: Ethylene-Octene Elastomer manufactured by Dow Chemical Japan Co.
   Octene content: 24 % by weight.
   MI: 5 g/10 min (190°C, 2.16 kgf) Density: 0.87 g/cm³
   - EPR1:: Ethylene-Propylene Rubber (EP961SP) manufactured by Japan Synthetic Rubber Co., Ltd.
   MFR: 0.7 g/10 min (230°C, 2.16 kgf)
   - EPR2:: Ethylene-Propylene Rubber (EP02P) manufactured by Japan Synthetic Rubber Co., Ltd.
   MFR: 3.2 g/10 min (230°C, 2.16 kgf)
   - EBR:: Ethylene-Butene Rubber (EBM2021P) manufactured by Japan Synthetic Rubber Co., Ltd.
   MFR: 1.3 g/10 min (190°C, 2.16 kgf)
(c) Talc
   LMS300 manufactured by Fiji Talc K.K.
   Average particle size: 1.25 µm (no surface treatment)

The respective amounts, as shown in Table 2, of the above materials were dry-blended in a super mixer, and melt-kneaded in a twin-screw extruder (PCM-45 manufactured by Ikegai K.K.) at 200°C and 200 rpm to obtain each polyolefin composition in the form of pellets. Each polyolefin composition was injection-molded under the conditions of a resin temperature of 210°C, an injection pressure of 600 kgf/cm², and a mold temperature of 40°C to prepare test pieces.

MFR of the polyolefin composition and the following properties of the test pieces were measured as follows.
(1) MFR (g/10 min): Measured according to JIS K7203 at 230°C under a load of 2.16 kgf.
(2) Elongation at Break (%): Measured according to JIS K7113.
(3) Embrittle Temperature (°C): Measured according to JIS K7216.
(4) Bending Modulus (MPa): Measured according to JIS K7203 at 23 °C.
(5) Moldability: Measured according to a spiral flow test in which a molten resin is allowed to flow through a spiral cavity of 2 mm thick from the center of the spiral at a resin temperature of 210°C and a mold temperature of 40°C under an injection pressure of 60 MPa. The moldability was evaluated by the flow distance, namely, excellent (E) for 550 mm or more, good (G) for 480 mm or more and poor (P) for less than 450 mm.

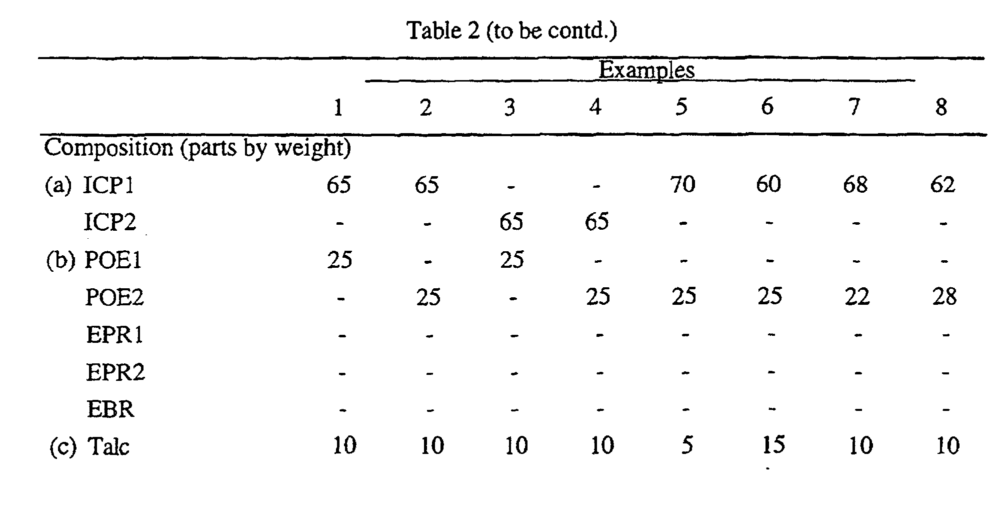

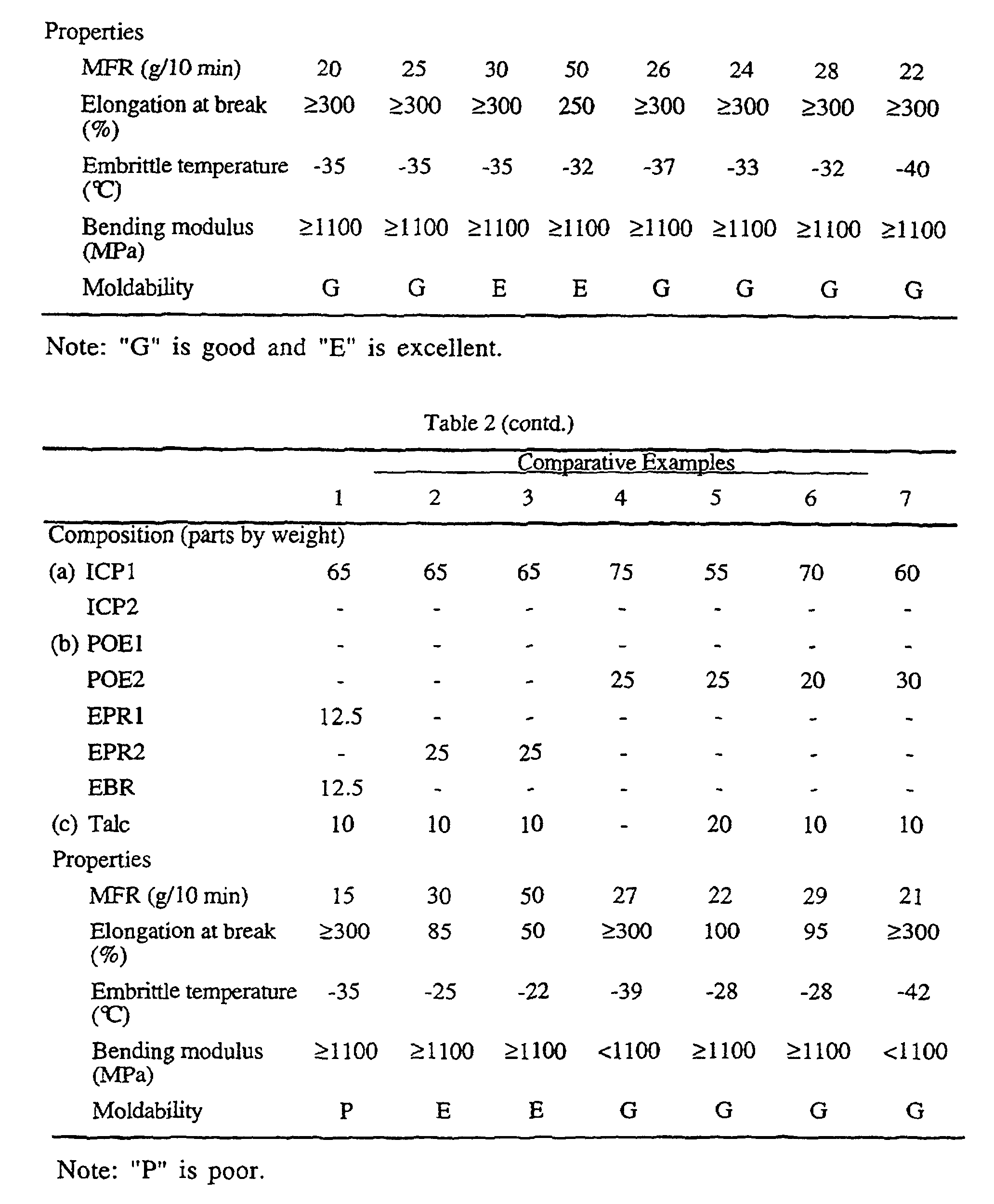

As seen from Table 2, the polyolefin composition of Examples 1 to 8 had a good moldability and the shaped articles produced therefrom were well balanced in the elongation at break, embrittle temperature and bending modulus.

### EXAMPLES 9 to 14 and COMPARATIVE EXAMPLES 8 to 12

The following materials were used to prepare a polyolefin composition.
(a) Crystalline Propylene-Ethylene Copolymer
   - ICP1:: Prepared in Synthesis Example 1
   - ICP2:: Prepared in Synthesis Example 2
(b) Ethylene-Octene Elastomer
   - POE2:: The same as in Examples 1 to 8.
(c) Polyethylene
   - LDPE:: Low Density Polyethylene manufactured by Nippon Unicar Company, Ltd.
   Density: 0.92 g/cm³
   MI: 20 g/10 min (190°C, 2.16 kg)
   - VLDPE:: Very Low Density Polyethylene manufactured by Nippon Unicar Company, Ltd.
   Density: 0.90 g/cm³ MI: 20 g/10 min (190°C, 2.16 kg)
(d) Ethylene-Propylene Rubber
   - EPR2:: The same as in Examples 1 to 8.
   - EPR3:: EP912P manufactured by Japan Synthetic Rubber Co., Ltd.
   MFR: 8.6 g/10 min (230°C, 2.16 kgf)
(e) Talc: The same as in Examples 1 to 8.

The respective amounts, as shown in Table 3, of the above materials were blended to produce each polyolefin composition in the same manner as in Examples 1 to 8. Each polyolefin composition was injection-molded to prepare test pieces also in the same manner as in Examples 1 to 8.

MFR of the polyolefin composition and several properties of the test pieces were measured in the same manner as in Examples 1 to 8 while the Rockwell hardness was measured according to JIS K7202.

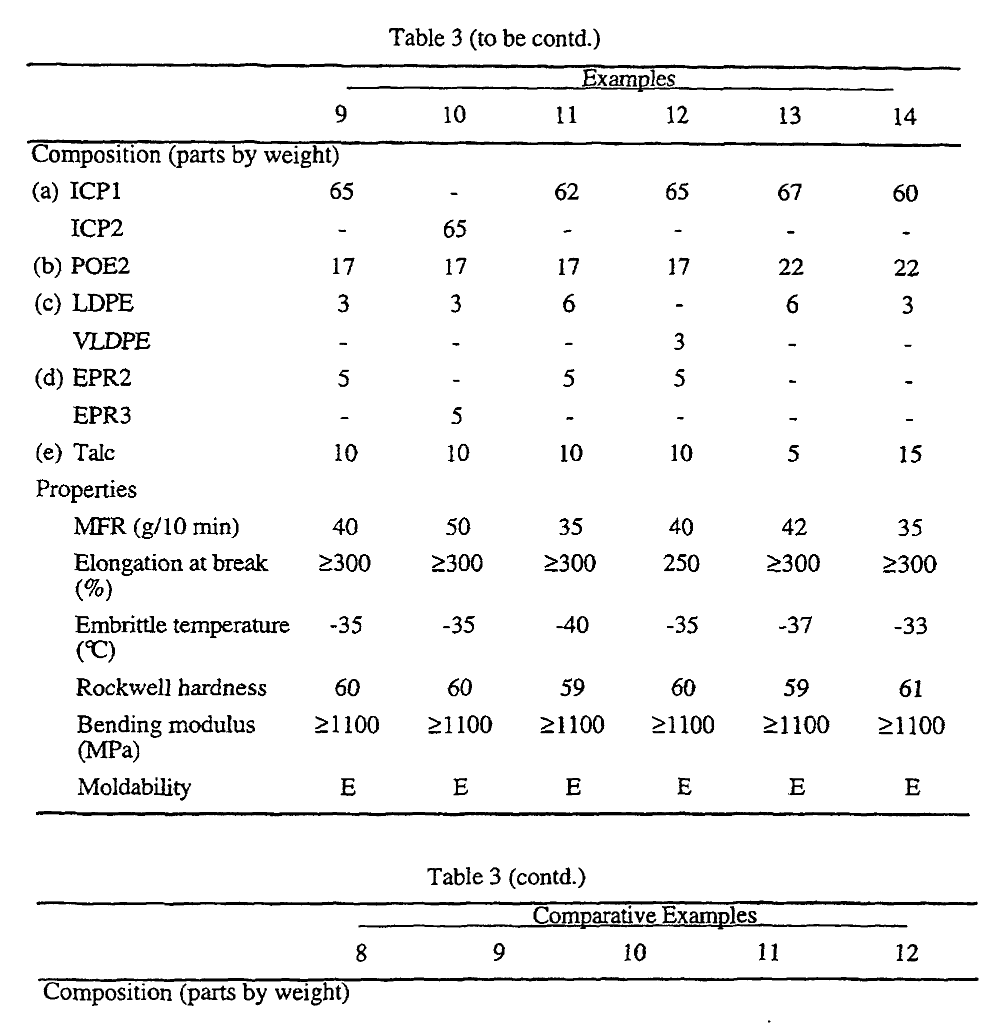

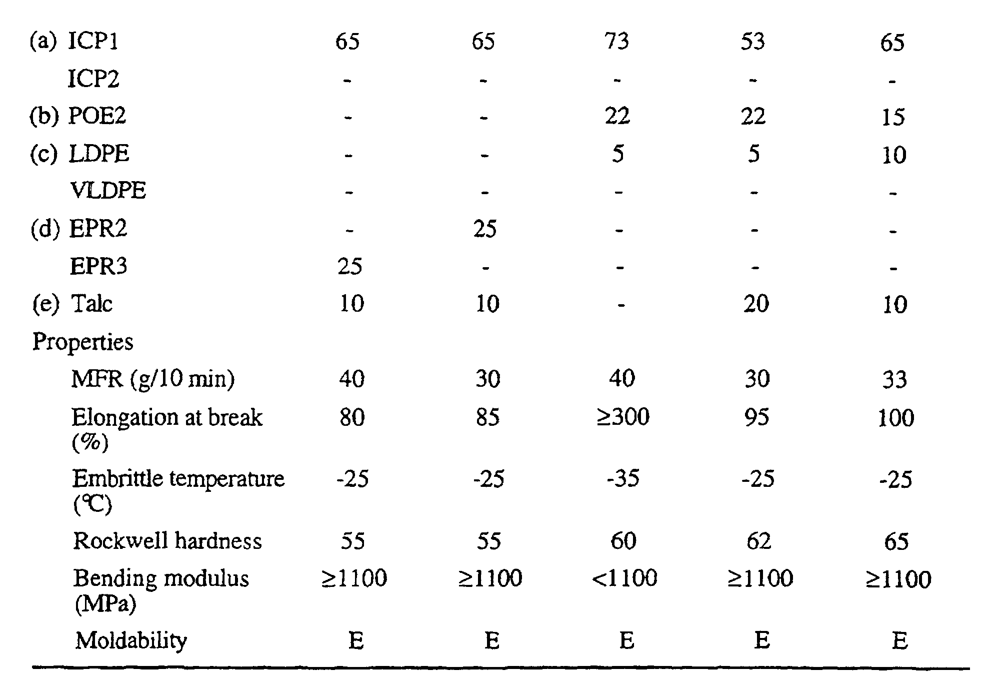

As seen from Table 3, the polyolefin composition of Examples 9 to 14 had a good moldability and the shaped articles produced therefrom were well balanced in the elongation at break, embrittle temperature, hardness and bending modulus.

As described above, the polyolefin composition of the present invention, which comprises a crystalline propylene-ethylene copolymer, an ethylene-octene elastomer and talc, has a good moldability. The shaped articles produced therefrom have good mechanical properties, impact strength and stiffness even when the thickness is as thin as about 2 to 3 mm. Further, the hardness of the shaped articles can be improved by replacing a part of the ethylene-octene elastomer with the polyethylene and optionally the ethylene-propylene rubber. Therefore, the polyolefin composition of the present invention may be widely applicable to produce not only automotive bumpers but also various exterior trims.

## Claims

1. A polyolefin composition comprising:
(a) 55 to 75 parts by weight of a crystalline propylene-ethylene copolymer comprising 70 to 90 weight % of a propylene homopolymer component having an isotactic pentad fraction of 96% or more when measured by ¹³C-NMR, and 10 to 30 weight % of a propylene-ethylene copolymer component having a propylene/ethylene weight ratio of 25/75 to 75/25, said crystalline propylene-ethylene copolymer being produced by block-copolymerizing ethylene and propylene by a multi-stage copolymerization method and having a melt flow rate of 70 g/10 min or more when measured at 230°C under a load of 2.16 kgf;
(b) 22 to 28 parts by weight of an ethylene-octene elastomer having a melt index of 0.5 g/10 min or more when measured at 190°C under a load of 2.16 kgf, said ethylene-octene elastomer comprising 20 to 30 weight % of octene and a remainder consisting essentially of ethylene; and
(c) 5 to 15 parts by weight of talc.

2. A polyolefin composition comprising:
(a) 55 to 75 parts by weight of a crystalline propylene-ethylene copolymer comprising 70 to 90 weight % of a propylene homopolymer component having an isotactic pentad fraction of 96% or more when measured by ¹³C-NMR, and 10 to 30 weight % of a propylene-ethylene copolymer component having a propylene/ethylene weight ratio of 25/75 to 75/25, said crystalline propylene-ethylene copolymer being produced by block-copolymerizing ethylene and propylene by a multi-stage copolymerization method and having a melt flow rate of 70 g/10 min or more when measured at 230°C under a load of 2.16 kgf;
(b) 12 to 22 parts by weight of an ethylene-octene elastomer having a melt index of 0.5 g/10 min or more when measured at 190°C under a load of 2.16 kgf, said ethylene-octene elastomer comprising 20 to 30 weight % octene and the remainder consisting essentially of ethylene;
(c) 2 to 8 parts by weight of a polyethylene having a melting peak of 100°C or higher when measured by a differential scanning calorimeter;
(d) 0 to 10 parts by weight of an optional ethylene-propylene rubber; and
(e) 5 to 15 parts by weight of talc;
the total of (b) + (d) being 22 parts by weight or less and the total of (b) + (c) + (d) being 22 to 28 parts by weight.

3. A polyolefin composition as claimed in claim 2, wherein said polyethylene is at least one selected from the group consisting of a low density polyethylene, a linear low density polyethylene and a very low density polyethylene.

4. A polyolefin composition as claimed in any one of the preceding claims, wherein said ethylene-octene elastomer is a polymer produced by copolymerizing octene and ethylene in the presence of a metallocene catalyst.

## Patentansprüche

1. Polyolefinzusammensetzung mit
(a) 55 bis 75 Gewichtsprozent eines kristallinen Propylen-Ethylen-Copolymers, das 70 bis 90 Gewichtsprozent einer Propylenhomopolymerkomponente mit einem Anteil an isotaktischer Pentade von 96 % oder mehr bei Messung mittels ¹³C-NMR, und 10 bis 30 Gewichtsprozent einer Propylen-Ethylen-Copolymerkomponente mit einem Propylen/Ethylen-Gewichtsverhältnis von 25/75 bis 75/25, wobei das kristalline Propylen-Ethylen-Copolymer durch Block-Copolymersation von Ethylen und Propylen durch ein mehrstufiges Copolymerisationsverfahren hergestellt ist und eine Fließgeschwindigkeit von 70 g/10 min oder mehr bei Messung bei 230 °C unter einer Last von 2,16 kgf aufweist,
(b) 22 bis 28 Gewichtsprozent eines Ethylen-Octen-Elastomers mit einem Schmelzindex von 0,5 g/10 min oder mehr bei Messung bei 190 °C unter einer Last von 2,16 kgf, wobei das Ethylen-Octen-Elastomer 20 bis 30 Gewichtsprozent Octen und einen im wesentlichen aus Ethylen bestehenden Rest aufweist, und
(c) 5 bis 15 Gewichtsprozent Talkum.

2. Polyolefinzusammensetzung mit
(a) 55 bis 75 Gewichtsprozent eines kristallinen Propylen-Ethylen-Copolymers, das 70 bis 90 Gewichtsprozent einer Propylenhomopolymerkomponente mit einem Anteil an isotaktischer Pentade von 96 % oder mehr bei Messung mit ¹³C-NMR und 10 bis 30 Gewichtsprozent einer Propylen-Ethylen-Copolymerkomponente mit einem Propylen/Ethylen-Gewichtsverhältnis von 25/75 bis 75/25, wobei das kristalline Propylen-Ethylen-Copolymer durch Block-Copolymerisation von Ethylen und Propylen durch ein mehrstufiges Copolymerisationsverfahren hergestellt ist und eine Fließgeschwindigkeit von 70 g/10 min oder mehr bei Messung bei 230 °C unter einer Last von 2,16 kgf aufweist,
(b) 12 bis 22 Gewichtsprozent eines Ethylen-Octen-Elastomers mit einem Schmelzindex von 0,5 g/10 min oder mehr bei Messung bei 190 °C unter einer Last von 2,16 kgf, wobei das Ethylen-Octen-Elastomer 20 bis 30 Gewichtsprozent Octen aufweist und der Rest im wesentlichen aus Ethylen besteht,
(c) 2 bis 8 Gewichtsprozent eines Polyethylens mit einem Schmelzpeak von 100 °C oder mehr bei Messung durch ein Kalorimeter mit Differentialabtastung,
(d) 0 bis 10 Gewichtsprozent eines optionalen Ethylen-Propylen-Gummis, und
(e) 5 bis 15 Gewichtsprozent Talkum,
wobei die Summe von (b) + (d) 22 Gewichtsprozent oder weniger und die Summe von (b) + (c) + (d) 22 bis 28 Gewichtsprozent beträgt.

3. Polyolefinzusammensetzung nach Anspruch 2, wobei das Polyethylen mindestens eines ist, das aus der aus einem Polyethylen mit niedriger Dichte, einem linearen Polyethylen mit niedriger Dichte und einem Polyethylen mit sehr niedriger Dichte bestehenden Gruppe ausgewählt ist.

4. Polyolefinzusammensetzung nach einem der vorstehenden Ansprüche, wobei das Ethylen-Octen-Elastomer ein Polymer ist, das durch Copolymerisation von Octen und Ethylen in Gegenwart eines Metallocenkatalysators hergestellt ist.

## Revendications

1. Composition de polyoléfine comprenant :
(a) de 55 à 75 parties en poids d'un copolymère de propylène-éthylène cristallin comprenant de 70 à 90 % en poids d'un composant d'homopolymère de propylène ayant une fraction de corps pentavalent istotactique de 96 % ou plus lorsqu'elle est mesurée par ¹³C-RMN et de 10 à 30 % en poids d'un composant de copolymère de propylène-éthylène ayant un rapport moléculaire 25/75 ou 75/25, ledit copolymère de propylène-éthylène étant produit en effectuant une copolymérisation séquencée de l'éthylène ou du propylène par une copolymérisation en plusieurs étapes et ayant un débit de masse fondue de 70 g/10 minutes ou plus lorsqu'il est mesuré à 230°C sous une charge de 2,16 kgf ;
(b) de 22 à 28 parties en poids d'un élastomère d'éthylène-octène ayant un indice de masse fondue de 0,5 g/10 minutes ou plus lorsqu'il est mesuré à 190°C sous une charge de 2,16 kgf, ledit élastomère d'éthylène-octène comprenant de 20 à 30 % en poids d'octène et le reste se composant essentiellement d'éthylène ; et
(c) de 5 à 15 parties en poids de talc.

2. Composition de polyoléfine comprenant :
(a) de 55 à 75 parties en poids d'un copolymère de propylène-éthylène cristallin comprenant de 70 à 90 % en poids d'un composant d'homopolymère de propylène ayant une fraction de corps pentavalent isotactique de 96 % ou plus lorsqu'il est mesuré par ¹³C-RMN et de 10 à 30 % en poids d'un composant de copolymère de propylène-éthylène ayant un rapport moléculaire 25/75 ou 75/25, ledit copolymère de propylène-éthylène étant produit en effectuant une copolymérisation séquencée de l'éthylène ou du propylène par une copolymérisation en plusieurs étapes et ayant un débit de masse fondue de 70 g/10 minutes ou plus lorsqu'il est mesuré à 230°C sous une charge de 2,16 kgf ;
(b) de 12 à 22 parties en poids d'un élastomère d'éthylène-octène ayant un indice de masse fondue de 0,5 g/10 minutes ou plus lorsqu'il est mesuré à 190°C sous une charge de 2,16 kgf, ledit élastomère d'éthylène-octène comprenant de 20 à 30 % en poids d'octène et le reste se composant essentiellement d'éthylène ;
(c) de 2 à 8 parties en poids d'un polyéthylène ayant un pic de fusion de 100°C ou plus lorsqu'il est mesuré par un calorimètre à balayage différentiel ;
(d) de 0 à 10 parties en poids d'un caoutchouc d'éthylène-propylène facultatif ; et
(e) de 5 à 15 parties en poids de talc ;
le total de (b) + (d) étant de 22 parties en poids ou moins et le total de (b) + (c) + (d) étant de 22 à 28 parties en poids.

3. Composition de polyoléfine selon la revendication 2, dans laquelle ledit polyéthylène est au moins un polyéthylène choisi dans le groupe se composant d'un polyéthylène base densité, d'un polyéthylène basse densité linéaire et d'un polyéthylène très basse densité.

4. Composition de polyoléfine selon l'une quelconque des revendications précédentes, dans laquelle ledit élastomère d'éthylène-octène est un polymère produit en copolymérisant l'octène et l'éthylène en présence d'un catalyseur métallocène.
